# EUROPEAN PATENT APPLICATION

(11) **EP 3 253 081 A1**
(43) Date of publication of application: **06.12.2017**
(21) Application number: 17173269.6
(22) Date of filing: 29.05.2017
(51) Int. Cl.: H04W 4/00, H04Q 9/00, H04L 29/08

(54) **SYSTEM AND METHOD FOR REAL TIME REMOTE MONITORING OF ATMOSPHERIC CONDITIONS OF PRODUCTS**

(30) Priority: 01.06.2016 US 201662344376 P; 19.05.2017 US 201715599490
(71) Applicant: Mega Link Technology Limited, Wan Chai (HK)
(72) Inventor: LAM, Wai Tong, Wan Chai (HK)
(74) Representative: Becker Kurig Straus

(57) **Abstract**

The present disclosure relates to the field of food chain monitoring at a plurality of situations and more particularly to a system and method for remotely monitoring of atmospheric conditions of one or more products. The remote monitoring system may comprise a data logger, a data collector, and an industrial tablet. The data logger may be enabled to log atmospheric data of the products present in a container and further send the atmospheric data to the data collector through data packet channels. The system may be further enabled for providing unique time slot to each data logger for sending the data packets without collision. The system may be further enabled with re-synchronisation methods for updating and synchronising the time of each data logger to avoid collision of two or more advertising packets.

## Description

### TECHNICAL FIELD

The present disclosure, in general, relates to a field of real time remote monitoring of atmospheric conditions within a particular region, and more particularly, relates to system and method for real time remote monitoring of atmospheric conditions of products in cold chains.

### BACKGROUND

Many food safety regulations put an emphasis on mission critical monitoring areas such as proper cooking temperatures, holding temperatures, storage environment conditions, serving temperatures, environmental conditions during transit, and several other points that are required to maintain the quality of any perishable product.

Food producers, shippers, trucking companies, restaurants, and other commercial establishments know the risks associated with each phase of the food safety chain, and work together to streamline processes and procedures to meet compliance, preserve & maintain quality, and to protect consumers from bacteria or spoiled goods. Without proper monitoring of environmental condition with sensors, such as temperature, humidity, pressure, vibration, proximity and ambient light sensor and the like, during the transportation and storage, the chilled food, frozen food, medicine and vaccine may easily be spoiled.

In current practice, most monitoring systems uses a passive or standalone environment sensor logger. The records are retrieved when the goods have been delivered. It cannot provide a real-time status of controlled products. This current system is not enabled to provide the real-time status of food product while in transit. This may lead to a risk when the environmental condition in a container has surpassed a critical limit which may spoil the food. At such conditions, one is unaware that the food product inside the container has started to spoil and it is realized only when the transit is completed at a target location where the sensor's data is retrieved and analysed.

Maintaining an optimal temperature in the food storage coolers, freezers or containers allows one to keep the food fresh. If the temperature falls above or below the optimal range, costly spoilage may occur.

### SUMMARY

In one implementation, a system for remotely monitoring of atmospheric conditions of one or more products is described. The system may comprise one or more data loggers for sensing and broadcasting atmospheric data associated with one or more products stored in one or more containers, wherein each of the one or more data loggers may be adapted to broadcast the atmospheric data at a predefined time slot. The system may further comprise one or more data collectors for capturing the atmospheric data via a wireless connection established between the one or more data loggers and the one or more data collectors, wherein the one or more data collectors may be configured to synchronize time stamp of each of the data logger with a time stamp of the one or more data collectors. The system may further comprise a server connectively coupled with one or more data collectors over a network, wherein the server may be enabled to obtain the atmospheric data of the one or more containers. Further, the server may transmit the atmospheric data to one or more user devices in communication with the server thereby facilitating real time monitoring of atmospheric conditions of the one or more products within the one or more containers.

In another implementation, a method for remotely monitoring atmospheric conditions of one or more products is described. The method may comprise sensing, via one or more data loggers, atmospheric data associated with one or more products stored in one or more containers, wherein each of the one or more data loggers may be adapted to broadcast the atmospheric data at a predefined time slot. The method may further comprise capturing, via one or more data collectors, the atmospheric data via a wireless connection established between the one or more data loggers and the one or more data collectors, wherein the data collector may be configured to synchronize time stamp of each of the data loggers with a time stamp of the data collector. The method may further comprise enabling the one or more data collectors to connect with a server over a network wherein the server may be enabled to obtain the atmospheric data of the one or more container. Further, the server may transmit the atmospheric data to one or more user devices in communication with the server thereby facilitating real time monitoring of atmospheric conditions of the one or more products within the one or more containers.

### BRIEF DESCRIPTION OF DRAWINGS

Fig.1A illustrates a data logger (hereafter referred as "Bluetooth Low Energy (BLE) temperature logger" or "BLE data logger" interchangeably), in accordance with an embodiment of the present subject matter.
Fig.1B illustrates mounting of the data logger on a food tray, in accordance with an embodiment of the present subject matter.
Fig. 2 illustrates a data collector (hereafter referred as "Bluetooth Low Energy (BLE) data collector" or "BLE data collector" interchangeably), in accordance with an embodiment of the present subject matter.
Fig. 3 illustrates a user device (e.g. an industrial tablet), in accordance with an embodiment of the present subject matter.
Fig. 4 illustrates an operation workflow, in accordance with an embodiment of the present subject matter.
Fig. 5 illustrates a state diagram depicting various states of the data logger, in accordance with an embodiment of the present subject matter.
Fig. 6 illustrates a state diagram of the BLE data collector, in accordance with an embodiment of the present subject matter.
Fig. 7 illustrates a timing diagram depicting multiple BLE data loggers sending the advertising packet simultaneously and thereby resulting a collision, in accordance with an embodiment of the present subject matter.
Fig. 8 illustrates a timing diagram depicting each BLE logger adapted for sending advertising packets only in an assigned unique time slot, in accordance with an embodiment of the present subject matter.
Fig. 9 illustrates a timing diagram depicting dynamic timeslot allocation for each BLE logger, in accordance with an embodiment of the present subject matter.
Fig. 10 illustrates a logistics flow diagram, in accordance with an embodiment of the present subject matter.
Fig. 11 illustrates an exemplary implementation of time slot allocation for multiple data loggers in order to broadcast the atmospheric data, in accordance with an embodiment of the present subject matter.
Fig. 12 illustrates a method of operation of the cold chain monitoring when the product is in transit through a Radio Frequency signals restricting area, in accordance with an embodiment of the present subject matter.
Fig. 13 illustrates a method of processing data, in accordance with an embodiment of the present subject matter.

### DETAILED DESCRIPTION

The present disclosure relates to the field of food chain monitoring at a plurality of situations and more particularly to a system and method for real time remote monitoring of atmospheric conditions of products.

The present application employs a Bluetooth Low Energy technology in data logger especially for its ability for consuming less power. Furthermore, almost all the communication devices comprising a smart phone, a tablet or a smart gadget have a wireless connection protocol comprising the GSM network, CDMA network, Infrared connection, Wi-fi network and Bluetooth connectivity. The BLE technology being an energy efficient and fast in responsiveness may simplify the system infrastructure and it may provide a simple process for the operator to check the products' status.

The real time remote monitoring system may comprise a data logger, a data collector, a user device and other auxiliary devices. The devices are implemented in the real time remote monitoring system to keep track of product temperature, humidity and expiry date. By using wireless communication protocols, more particularly, the Bluetooth Low energy (BLE) technology, different types of mobile devices may easily check the corresponding product status.

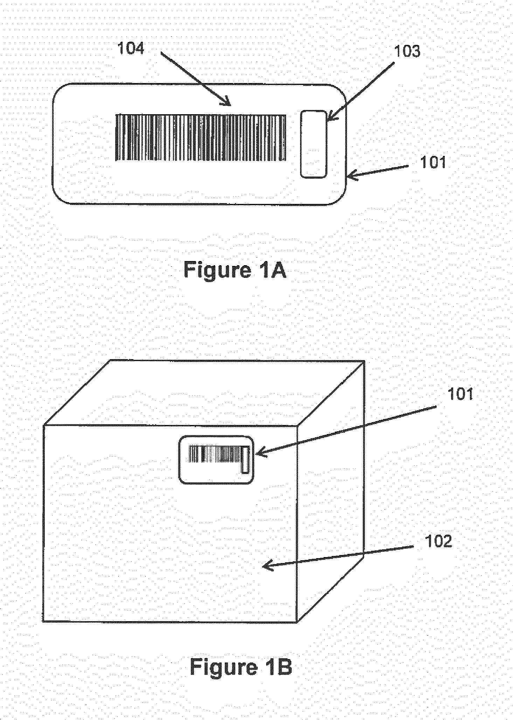

Referring to Fig. 1A, a data logger 101 is illustrated, in accordance with an embodiment of the present subject matter. Fig.1B illustrates a placement of the data logger 101, in accordance with an embodiment of the present subject matter. The data logger 101 may be placed in or mounted on a container 102. A temperature sensor in the data logger 101 may detect atmospheric condition of the space near and in the container 102 and further use BLE advertising channels to broadcast the atmospheric data. In an embodiment, the atmospheric data may comprise a plurality of temperature and humidity readings of the space in the room and near the container 102. Such data may be further referred for analyzing status of the products present inside the containers 102, wherein the status of such products may depend on the temperature at which they are being stored, The products may include, but not limited to, ice cream, volatile matter and the like.

In an embodiment, the data logger 101 may include two Light Emitting Diodes (LEDs) 103, green and red. Further, the data logger 101 may include a barcode 104 containing Bluetooth address associated with the data logger 101. The LEDs 103 may be enabled to indicate statuses of the data logger 101 as listed in Table 1 below.

**Table 1:**

| LED indication | Status |
|---|---|
| Both LED OFF | Device is OFF |
| Green LED slow flashing | Device is operating and temperature does not exceed a pre-defined range |
| Red LED slow flashing | Device is operating and temperature has exceeded the pre-defined range |

In one embodiment, the features or the hardware specifications of the data logger 101 may be those as depicted in table 2 below.

**Table 2:**

| General Specification | |
|---|---|
| Bluetooth | Bluetooth 4.1 |
| Key | One function key |
| Indication | One Bi-color LED |
| | Red + Green |
| Temperature Sensor | -40°C to 125°C |
| Humidity Sensor | 0-80% |
| Memory storage | ∼15000 temperature records |
| Power Supply | Internal non-rechargeable lithium battery |

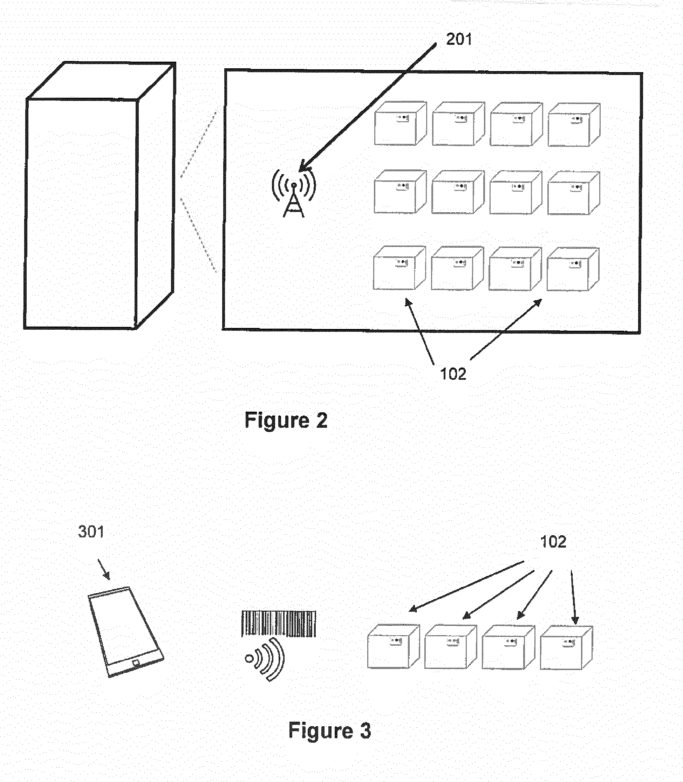

Now referring to Fig. 2, a data collector 201 is illustrated, in accordance with an embodiment of the present subject matter. In one embodiment, the data collector 201 may comprise four Bluetooth modules to capture the temperature and humidity records from the data logger 101 by establishing a Bluetooth connection with the data logger 101. In an embodiment, three Bluetooth modules may be configured to listen to three advertising channels, whereas the fourth module may be employed to setup the Bluetooth connection between the data collector 201 and the data logger 101 to retrieve the atmospheric data (temperature and humidity) log.

In an embodiment, the features or the hardware specifications of the data collector 201 may be those as depicted in table 3-4 below. The data collector 201 may comprise a main unit and an antenna unit.

Specification of the main part is as provided in the Table 3 below:

**Table 3:**

| **General Specification** | |
|---|---|
| CPU | Intel CPU |
| OS | Microsoft Windows |
| Power supply | 9-36V DC input 12V DC output |
| Button | One power button |
| Mobile network (Data) | Yes |
| WIFI | Yes |
| Communication port | RS422 (Communication between main unit and antenna unit) |

Further, the Specification of the Antenna part is as provided in Table 4 below:

**Table 4**

| **General Specification** | |
|---|---|
| Operatic Voltage | 12V |
| Communication port | RS422 (Communication between main unit and antenna unit) |
| Bluetooth | 4 x Bluetooth 4.1 |
| Temperature sensor ports | 4 channels one wire interface |

Referring to Fig. 3, a user device 301 is illustrated, in accordance with an embodiment of the present subject matter. In an embodiment, the user device 301 may be a smartphone, a tablet, a smart gadget or any other smart electronic device. Before the data logger 101 may initiate monitoring of the atmospheric data, it is necessary to setup a relationship between the product present in the container and the temperature. Such relationship between the product and the temperature may be setup by executing an association process via the user device 301.

The association process may include scanning of the bar code 104 pertaining to the data logger 101 and food packing. The user device 301 (also to be referred as "industrial tablet"), based upon scanning of the bar code 104, may identify the Bluetooth address of the data logger 101 and thereby initiate a Bluetooth connection with the data logger 101 to send configuration settings and system time to the data logger 101. After the association process, the data logger 101 may initiate the process of monitoring of the atmospheric conditions.

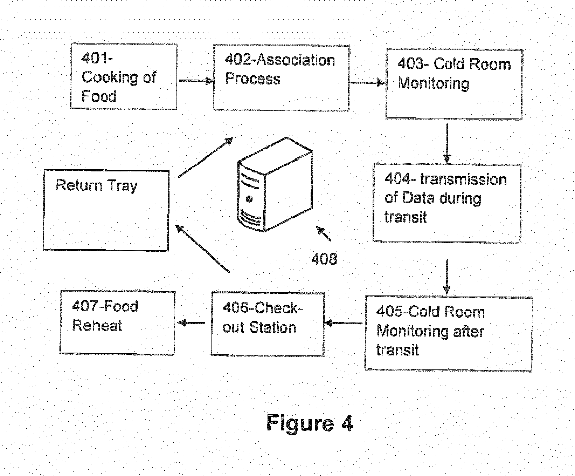

Referring to Fig. 4, an operation workflow of the remote monitoring method is illustrated. The workflow depicts multiple steps right from initiating food production, intermediate steps of food transit and finally concluded with food reheating process. At step 401, when the food is prepared or partially cooked, the food may be packed in food packages and placed in trays or polyfoam boxes 102. At step 402, the data logger 101 may be executed to transfer the atmospheric data after establishing the association between the food and the temperature logger. After the association process, at step 403, the container 102 may be moved to a cold room for monitoring purpose. The data collector 201 located in the cold room may be configured to receive the advertising packets from each of the data logger 101. In one embodiment, the data collector 201 may be provided with three dedicated Bluetooth modules so that data collector 201 can minimize the packet loss.

At step 404, the data collector 201 may be installed in a truck so as to continue to monitor the temperature information during transportation. The information may be sent out by a 3G/4G communication network.

At step 405, the centralized server 408 may communicate with each of the data collector 201 to retrieve the temperature information for all the trays or containers 102. The operators may access the temperature information through their user devices. The server 408 may analyze the product status automatically and provide appropriate notification alerts on the user devices associated with the operators.

At step 406, a final stage is a check-out process which is executed when the product leaves the container 102. The data logger 101 may disable the temperature logging function and switch to the OFF mode. The one or more tray(s) containing the products may be returned to reuse for the next lot of products. Thereafter, at step 407, the product which is transported safely is reheated or recooked for serving purpose.

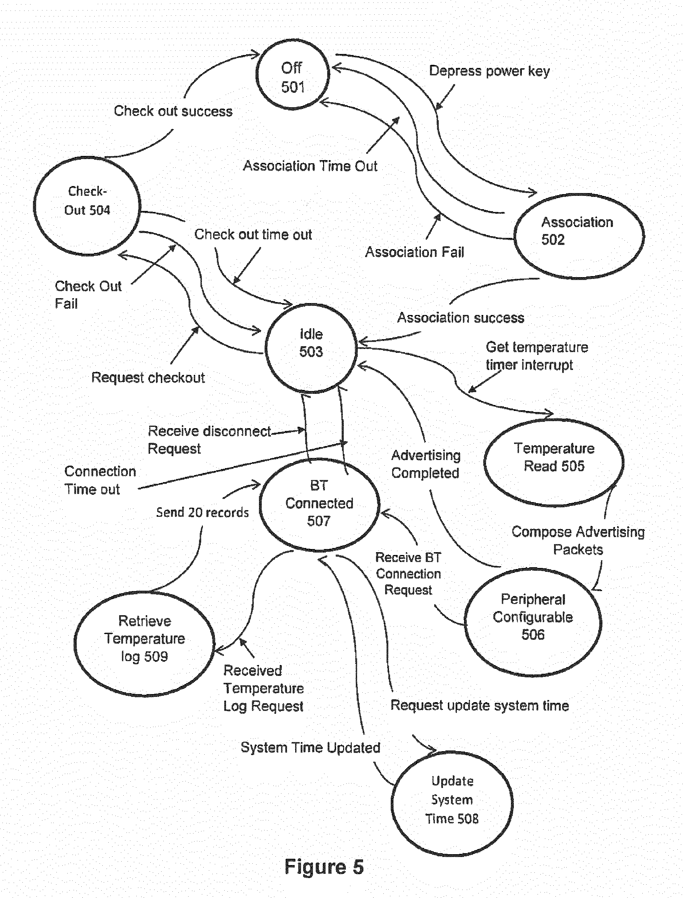

Referring to Fig.5, it is a state diagram depicting various states of the data logger 101, in accordance with an embodiment of the present subject matter. As shown, the states may further comprise:

OFF mode (501) - In this state, the data logger 101 may be switched off and further may be activated by operating the power key.

Association mode (502) - In this state, the data logger 101 is waiting for the Bluetooth connection. The data logger 101 may start an operation after receiving the configuration information from the industrial tablet 301.

Idle mode (503)- In this state, the data logger 101 may check the temperature sensor reading and store it to the serial memory periodically. If a power key is depressed, the data logger 101 may switch to a check-out mode (504).

Check out mode (504)- In this state, the data logger 101 is waiting for the Bluetooth connection. Further, the data logger 101 may stop the operation after receiving the OFF command.

Temperature read mode (505)- In this state, the data logger 101 may obtain one temperature record.

Peripheral configurable mode (506)- In this state, the data logger 101 may compose ten temperature records and check the battery level. Further, the data logger 101 may use advertising channels to send the temperature information.

Bluetooth connected mode (507)- In this state, the data logger 101 may be connected to the server 408. The server 408 may be enabled to issue READ command to get the dedicated temperature records.

Update system time mode (508)- In this state, the server 408 passes the time information to the data logger 101 for synchronization purpose.

Retrieve temperature log mode- In this state, the data collector 201 may send the temperature records to the server 408.

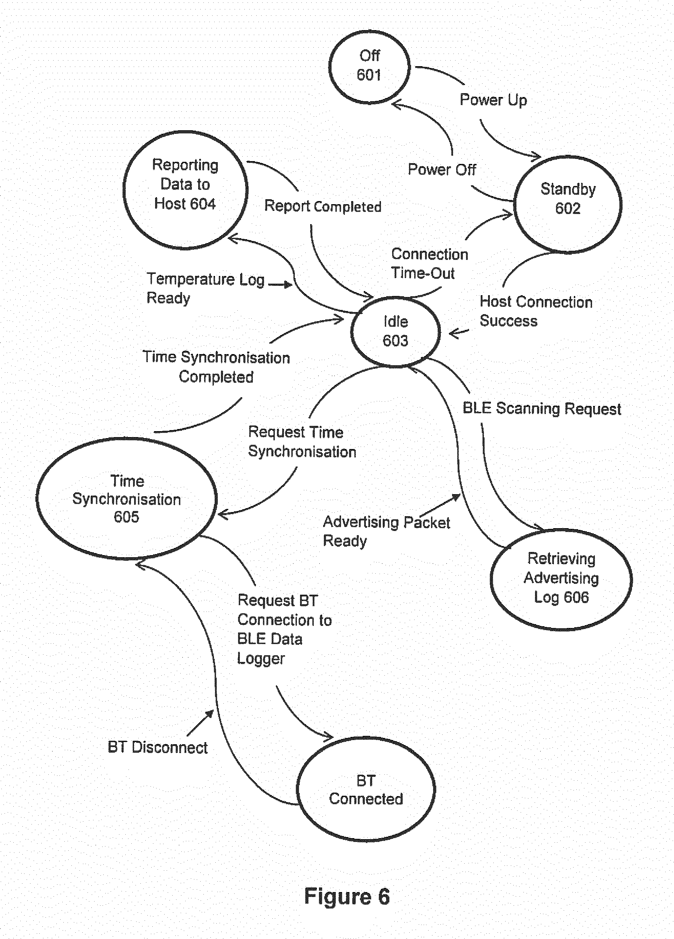

Now referring to Fig. 6, it is a state diagram depicting various states of the data collector 201, in accordance with an embodiment of the present subject matter. In one embodiment, the states may further comprise:

OFF mode (601)- In this state, the data collector 201 may be switched OFF and may be activated by operating the power key.

Standby mode (602)- In this state, the data collector 201 is waiting for the WIFI/3G connection. Further, the data collector 201 may initialize operation after receiving the configuration information.

Idle mode (603)- In this state, the data collector 201 may be scanning the advertising packet from the data logger 101, arranging the time synchronization and uploading the temperature records to the back-end server 408 periodically.

Reporting data to Host mode (604)- In this state, the data collector 201 may be uploading the temperature records to the back-end server 408.

Time synchronization mode (605)- In this state, the data collector 201 may be sending the time information to the data logger 101.

Retrieve advertising log mode (606)- In this state, the data collector 201 may utilize three Bluetooth modules to scan the advertising packets from each of the data logger 101 in same area.

In accordance with aspects of the present subject matter, a Bluetooth BLE time slot for each BLE device is described herein. In one embodiment, a Time Division Duplex scheme may define each Bluetooth time slot to 625µs in length. The BLE advertising packet transmission time may be less than 625µs. Therefore, to send the advertising packets in all three advertising channels, the required time is around 1.875ms (625µs x 3).

In accordance with aspects of the present subject matter, the BLE advertising and the corresponding data channel indexes are described herein. In one embodiment, there are thirty-seven data channels and three advertising channels defined in Bluetooth 4.0. The channel allocation is listed in the below table 5.

**Table 5:**

| **RF Channel** | **RF Center Frequency** | **Channel Type** | **Data Channel Index** | **Advertising Channel Index** |
|---|---|---|---|---|
| 0 | 2402 MHz | Advertising channel | | 37 |
| 1 | 2402 MHz | Data channel | 0 | |
| 2 | 2406 MHz | Data channel | 1 | |
| ... | ... | Data channels | ... | |
| 11 | 2424 MHz | Data channel | 10 | |
| 12 | 2426 MHz | Advertising channel | | 38 |
| 13 | 2428 MHz | Data channel | 11 | |
| 14 | 2430 MHz | Data channel | 12 | |
| ... | ... | Data channels | ... | |
| 38 | 2478 MHz | Data channel | 36 | |
| 39 | 2480 MHz | Advertising channel | | 39 |

In accordance with aspects of the present subject matter, the advertising packet of the data logger 101 is described herein. In one embodiment, the advertising packet may contain thirty-seven bytes of data. The first six bytes may be reserved for Bluetooth address, the usage of other thirty-one bytes may not be mandatory. The present application defines the advertising packet for the data logger 101 as shown in table 6 below.

**Table 6:**

| **Byte** | **Value** | **Description** |
|---|---|---|
| 0 | 0x02 | Len |
| 1 | 0x01 | Type: Flags |
| 2 | 0x06 | Value: General Discoverable |
| 3 | 0x1B | Len |
| 4 | 0xFF | Type: Manufacturing Data |
| 5..6 | 0xXXXX | UUID |
| 7..8 | 0xXXXX | Slot ID |
| 9..10 | 0xXXXX | Station ID + Advertising period |
| 11..12 | 0xXXXX | Temperature 0 (0xFFFF - invalid) Latest records |
| 13..14 | 0xXXXX | Temperature 1 |
| 15..16 | 0xXXXX | Temperature 2 |
| 17..18 | 0xXXXX | Temperature 3 |
| 19..20 | 0xXXXX | Temperature 4 |
| 21..22 | 0xXXXX | Temperature 5 |
| 23..24 | 0xXXXX | Temperature 6 |
| 25..26 | 0xXXXX | Temperature 7 |
| 27 | 0xXX | Flag |
| 28..30 | 0xXXXXXX | packet ID |

In one embodiment, each advertising packet may include seven historical temperature records and latest record summing up a total of eight records. Such packet format design allows the data collector 201 to receive only one packet for eight consecutive packets without losing temperature records.

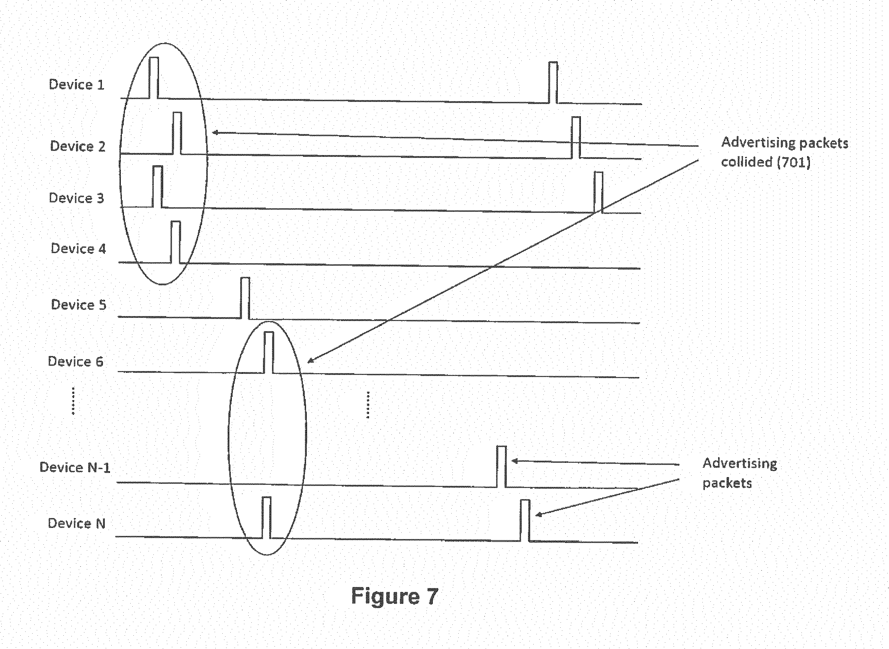

Now referring to Fig. 7, a timing diagram depicting multiple BLE data loggers (hereafter referred as BLE devices interchangeably) sending the advertising packet simultaneously and thereby resulting a collision (701) is illustrated. The BLE devices 101 may use the advertising packet to send the temperature information occasionally. When there are multiple data logger 101 located in the same room and further several data logger 101 may be employed to send the advertising packet simultaneously, there may be an occurrence of collision (701) as shown in Fig. 7. Furthermore, due to such collision, the central server 408 may not be able to receive the correct information/data from each of the data logger 101.

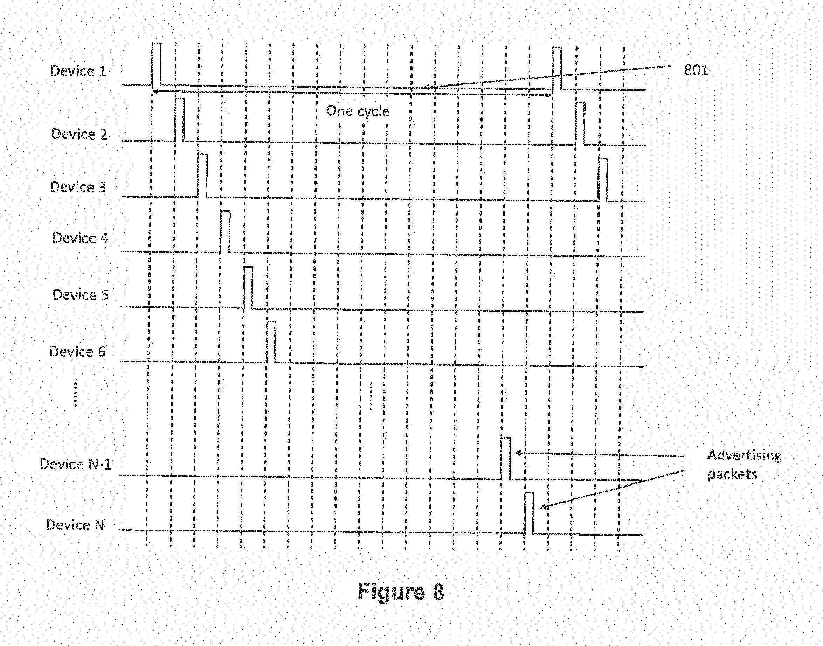

Referring to Fig. 8, a timing diagram depicting each BLE data logger adapted for sending advertising packets only in an assigned unique time slot is illustrated, in accordance with an embodiment of the present subject matter. During the association process, the system time may be stored in each of the data logger 101 and a unique time slot (801) may be allocated to each of the data logger 101 for sending advertising packet. The unique time slot (801) indicates one time cycle as illustrated in Fig.8. Allocation of unique time slot 801 prevents the data collision due to multiple data logger 101. The cycle time may depend on the supported number of data logger 101 in the system. In the cold chain monitoring system, the sampling period for temperature controlled products may be allowed from one to five minutes. The time synchronization method may enable increasing the number of supported BLE device to 2000 units.

In accordance with aspects of the present subject matter, a time re-synchronization for each of the data logger 101 is described herein for facilitating collision avoidance. After receiving the system clock from the industrial tablet, the data logger 101 may use the internal clock to determine a time to send the advertising packet. The clock in the data logger 101 may have a limited accuracy which may not be similar to the system clock accuracy thereby resulting in the clock drift problem. This clock drift destroys the time synchronized mechanism and therefore a packet collision may be resulted. In order to align the system time between the data logger 101 and the data collector 201, two different approaches/methods may be implemented in the data collector 201 to handle the time re-synchronization.

In the first approach/method, the data collector 201 may broadcast the time stamp every multiple seconds. Such broadcasting may enable each of the data logger 101 to receive the time stamp and then update their system time. Such an update ensures that the time between the data collector 201 and each of the data logger 101 is synchronized.

In the second approach/method, the data collector 201 may analyse the time stamp of the advertising packets received from each of the data logger 101. If data collector 201 observes that the clock drift has a trend to an upper limit, the data collector 201 may re-synchronize the time of at least one of the data logger 101.

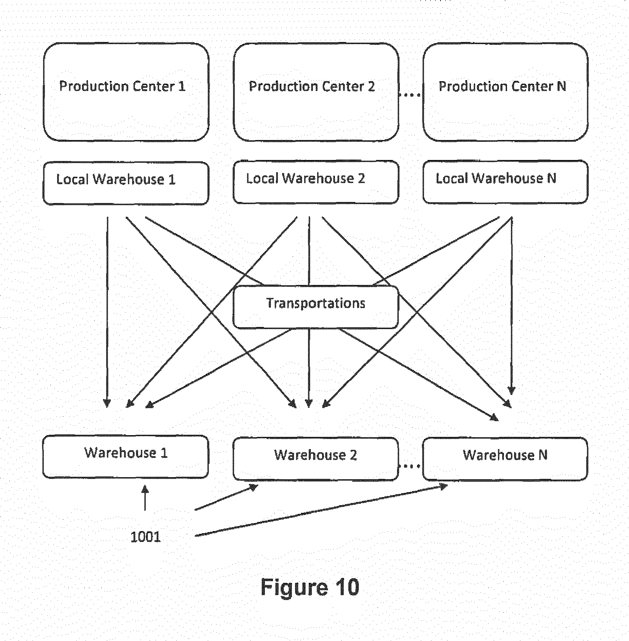

Now referring to Fig. 10, a logistics flow diagram is illustrated. In one embodiment, an individual warehouse 1001 may receive the temperature controlled products from different production centres. Two or more data logger 101 may share the same time slot for sending the sensors/atmospheric data. This might affect the performance of scheduled advertising packet. In an embodiment, the data collector 201 may continue receiving the advertising packet from all data logger 101. The data collector 201 may compose a time slot allocation table to indicate a time slot allocated to each data logger 101 for preventing congestion/collision.

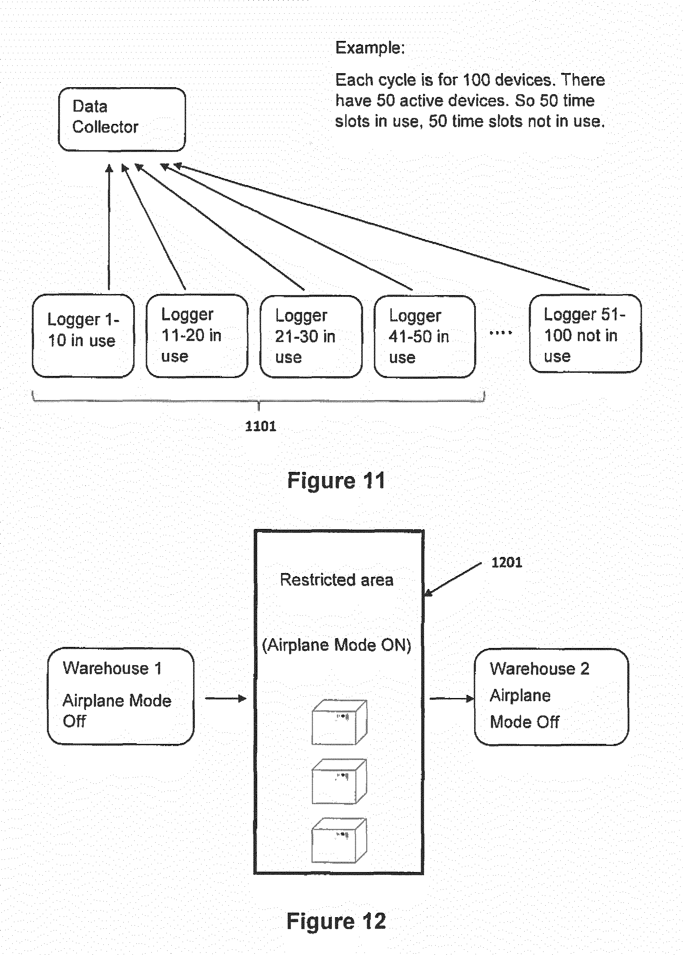

Fig. 11 illustrates an exemplary implementation of time slot allocation for multiple BLE devices in order to broadcast the atmospheric data, in accordance with an embodiment of the present subject matter. In this exemplary implementation, a cycle time for hundred BLE data loggers is set, wherein there are only fifty active BLE devices 101. Based on the advertising packets from the active BLE devices 101, the data collector 201 may compose a time slot allocation table 7 as depicted below.

**Table 7:**

| **Slot 1-10** | **Slot 11-20** | **Slot 21-30** | **Slot 31-40** | **Slot 41-50** | **Slot 51-60** | **Slot 61-70** | **Slot 71-80** | **Slot 81-90** | **Slot 91-100** |
|---|---|---|---|---|---|---|---|---|---|
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |

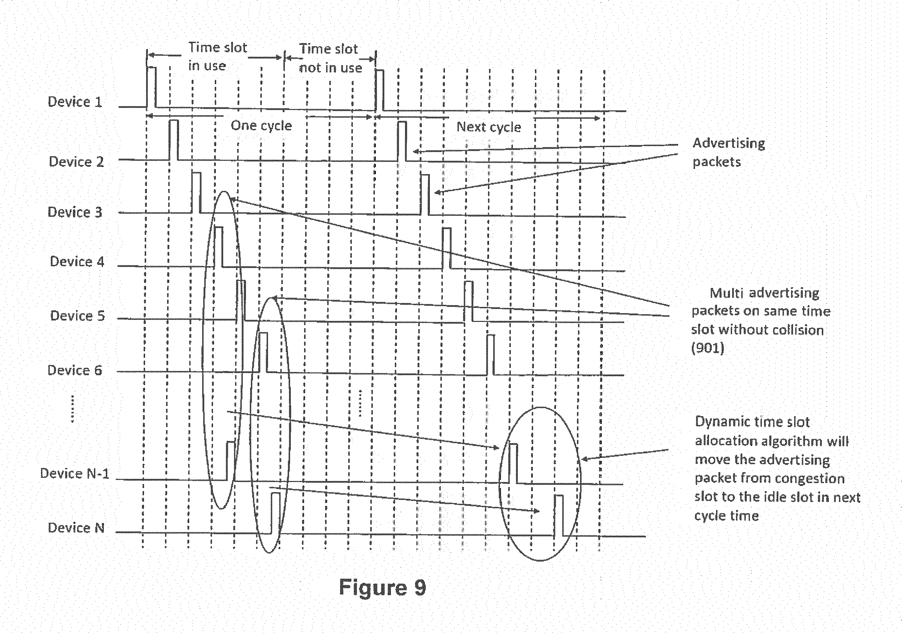

Now referring to Fig. 9, it is a scenario depicting two data loggers 101 sharing the same time slot (901). Such scenario is represented in the table 8 below in time slot 3 and time slot 5. The time slot allocation table 8 therefore indicate two congestion time slots, namely time slot 3 and time slot 5.

**Table 8:**

| **Slot 1-10** | **Slot 11-20** | **Slot 21-30** | **Slot 31-40** | **Slot 41-50** | **Slot 51-60** | **Slot 61-70** | **Slot 71-80** | **Slot 81-90** | **Slot 91-100** |
|---|---|---|---|---|---|---|---|---|---|
| In use | In use | In use | In use | In use | Not in use | Not in use | Not in use | Not in use | Not in use |
| In use | In use | In use | In use | In use | Not in use | Not in use | Not in use | Not in use | Not in use |
| **Two devices in use** | In use | In use | In use | In use | Not in use | Not in use | Not in use | Not in use | Not in use |
| In use | In use | In use | In use | In use | Not in use | Not in use | Not in use | Not in use | Not in use |
| **Two devices in use** | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |

In an embodiment, there may be two conditions resulting in the occurrence of the congestion time slot. The first condition is duplication of a time slot identifier (ID). The advertising packet from each data logger 101 may include the time slot ID. If the data collector 201 receives the same time slot ID from two devices, such condition indicates the duplication of time slot ID. Whereas, the second condition indicates a condition wherein more than ten data loggers 101 are found in ten-time slot duration. Assuming each time slot of 30ms is assigned for one data logger 101, if the data collector 201 receives more than ten data loggers 101 information every 300ms, the utilization is greater than 100% and hence resulting in the congestion.

In one embodiment, based upon detection of the congestion, the data collector 201 may establish a Bluetooth connection to relocate and/or re-assign the devices to an idle time slot thereby facilitating dynamic/real-time time slot allocation for the devices in case of collision/congestion. Based upon the relocation/re-assignment, the channel allocation table may be updated in form of new table 9 as below. As depicted in table 9 below, the congested devices are moved to idle time slot such as 51 and 53 respectively.

**Table 9:**

| **Slot 1-10** | **Slot 11-20** | **Slot 21-30** | **Slot 31-40** | **Slot 41-50** | **Slot 51-60** | **Slot 61-70** | **Slot 71-80** | **Slot 81-90** | **Slot 91-100** |
|---|---|---|---|---|---|---|---|---|---|
| In use | In use | In use | In use | In use | **In use** | Not in use | Not in use | Not in use | Not in use |
| In use | In use | In use | In use | In use | Not in use | Not in use | Not in use | Not in use | Not in use |
| In use | In use | In use | In use | In use | **In use** | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |
| In use | In use | In use | In use | In use | Not in use | Not in use | Not in use | Not in use | Not in use |

The dynamic timeslot allocation therefore may resolve the congestion problem by re-allocating particular data logger 101 from congestion slot to the idle time slot. This dynamic timeslot allocation may be implemented by the local BLE data collector for small scale implementation. For the large-scale implementation that includes multiple production centres and multiple warehouses, a plenty of sensor data may be obtained, All the data collector 201 may be connected to a centralized computing device to implement the aforementioned dynamic time slot allocation.

Referring to Fig. 12, a method of operation of the cold chain monitoring when the product is in transit through a Radio Frequency signals restricting area is illustrated, in accordance with an embodiment of the present subject matter. During the transportation, the goods and data logger 101 may pass through some locations 1201 that prohibit the devices to transmit RF signals. For such instances, the data logger 101 may be preprogramed to enable the auto airplane feature, so that the data logger 101 may be switched to airplane mode automatically. No Bluetooth radio frequency signal may be allowed to be transmitted in the airplane mode.

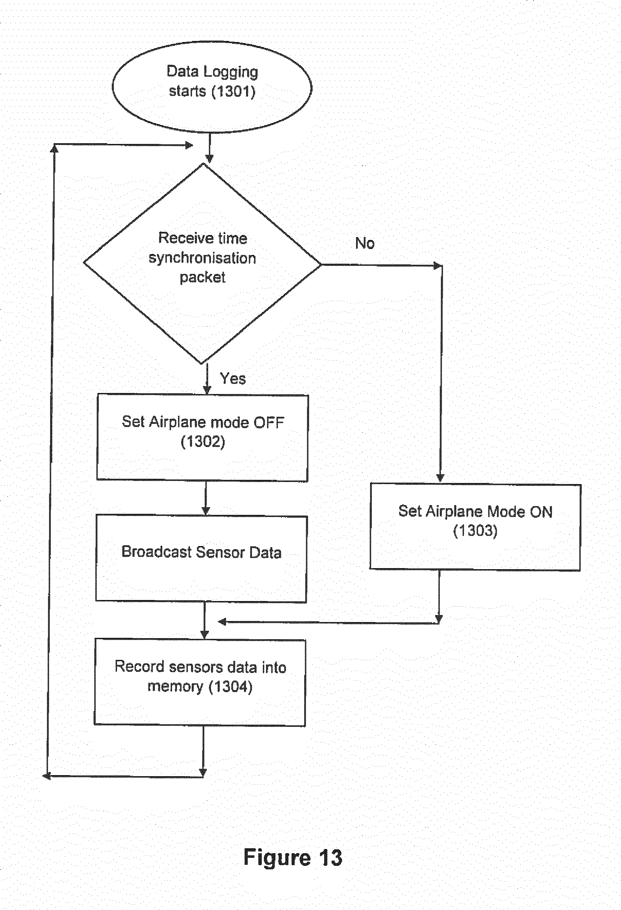

Now referring to Fig. 13, a method of processing data is illustrated, in accordance with an embodiment of the present subject matter.

As shown, at step 1301, the data logger 101 and the data collector 201 may be located in a same area (e.g. a warehouse). The data logger 101 may receive the time synchronization packet from the data collector 201.

At step 1302, if the regular based time synchronization packet is received, the data logger 101 may continue to broadcast the sensors data.

At step 1303, when the data logger 101 is moved outside the RF coverage area of the data collector 201 after missing time synchronization packets for several times, the data logger 101 may be switched to airplane mode and the sensors data may be recorded in a local non-volatile memory.

At step 1304, the data logger may record the received sensor data into the memory of the data logger. Such recording of the sensor data may be either when the sensor data is broadcasted or when the airplane mode is switched off from the ON state.

When the data logger 101 moves to another warehouse 1001, data logger 101 may receive the time synchronization packet from another data collector 201. The data logger 101 may disable the airplane mode automatically and start to broadcast the sensors data.

Although implementations for system and method remotely monitoring of atmospheric conditions of one or more products have been described in language specific to structural features and/or methods, it is to be understood that the appended claims are not necessarily limited to the specific features or methods described. Rather, the specific features and methods are disclosed as examples of implementations remotely monitoring of atmospheric conditions of one or more products.

## Claims

1. A system for remotely monitoring of atmospheric conditions of one or more products, the system comprising:
one or more data loggers for sensing and broadcasting atmospheric data associated with one or more products stored in one or more containers, wherein each of the one or more data loggers is adapted to broadcast the atmospheric data at a predefined time slot;
one or more data collectors for capturing the atmospheric data via a wireless connection established between the one or more data loggers and the one or more data collectors, wherein the data collector is configured to synchronize time stamp of each of the data logger with a time stamp of the data collector; and
a server connectively coupled with the one or more data collectors over a network, wherein the server is enabled to obtain the atmospheric data of the container.

2. The system of claim 1, wherein the one or more data loggers are connectively coupled with the one or more data collectors via a Bluetooth low energy (BLE) network for communicating the atmospheric data and the time stamp, and wherein the atmospheric data further comprise at least temperature and humidity data of the space in the container.

3. The system of claim 2, wherein the data logger broadcasts the temperature and humidity data via one or more advertising channels.

4. The system of claim 3 further comprising a user device configured for
associating the one or more data loggers with the one or more products based upon scanning a code associated with one or more data loggers, wherein the association further comprises setting up a relationship between product parameters and the data logger parameters; and
allocating a unique time slot to each of the data logger belonging to a plurality of data loggers for broadcasting the atmospheric data.

5. The system of claim 1, wherein the server is capable of analyzing product status present in the container based on the received atmospheric data and generate notification alerts.

6. The system of claim 1, wherein each of the one or more data collectors further comprises a plurality of Bluetooth modules, wherein at least one of the plurality of Bluetooth modules is adapted for facilitating connection of the one or more data collectors connecting with the one or more data loggers.

7. The system of claim 4, wherein the user device is enabled to scan the barcode represented on the one or more data loggers to decrypt a Bluetooth address associated with the one or more data loggers in order to connect and associate the one or more data loggers with the one or more products.

8. The system of claim 7, wherein the user device while associating the one or more data loggers with the one or more products allocates a unique time slot to each of the one or more data loggers for broadcasting the atmospheric data to the data collector to prevent the collision of data signals from each of the data logger.

9. The system of claim 1, wherein the one or more data collectors synchronizes the time stamp of each of the data logger with the time stamp of the data collector by
broadcasting the time stamp of the data collector to each of the one or more data logger, wherein each of the one or more data loggers updates the respective time stamps in synchronization with the time stamps received from the one or more data collectors OR
detecting clock drift pattern based on the analysed time stamp provided within the advertising packets received from the data logger and thereby re-synchronizing the time stamps of each of the one or more data loggers.

10. The system of claim 9, wherein at least one data collector is further configured to re-assign time slot of at least one of the two or more data loggers transmitting the respective atmospheric data within a same previously assigned time slot.

11. A method for remotely monitoring atmospheric conditions of one or more products, the method comprising:
sensing, via one or more data loggers, atmospheric data associated with one or more products stored in one or more containers, wherein each of the one or more data loggers is adapted to broadcast the atmospheric data at a predefined time slot;
capturing, via one or more data collectors, the atmospheric data via a wireless connection established between the one or more data loggers and the one or more data collectors, wherein the one or more data collectors are configured to synchronize time stamp of each of the data logger with a time stamp of the data collector; and
enabling the one or more data collectors to connect with a server over a network, wherein the server is enabled to obtain the atmospheric data of the container.

12. The method of claim 11, wherein the one or more data loggers are connectively coupled with the one or more data collectors by Bluetooth low energy (BLE) network for communicating the atmospheric data and the time stamp, and wherein the atmospheric data further comprises temperature and humidity data of the space in the container.

13. The method of claim 12, wherein each of the one or more data collectors further comprise a plurality of Bluetooth modules, wherein at least one of the plurality of Bluetooth modules is adapted for facilitating connection of the one or more data collectors connecting with the one or more data loggers.

14. The method of claim 11, wherein the one or more data collectors synchronizes the time stamp of each of the data logger with the time stamp of the data collector by
broadcasting the time stamp of the data collector to each of the data logger, wherein each of the one or more data loggers updates the respective time stamps in synchronization with the time stamps received from the one or more data collectors OR
detecting the clock drift pattern based on the analysed time stamp provided within the advertising packets received from the data logger and thereby re-synchronizing the time stamps of each of the one or more data loggers.

15. The method of claim 14, wherein at least one data collector is further configured to re-assign time slot of at least one of the two or more data loggers transmitting the respective atmospheric data within a same previously assigned time slot.
